# DEMANDE DE BREVET EUROPEEN

(11) **EP 1 480 222 A1**
(43) Date de publication de la demande: **24.11.2004**
(21) Numéro de dépôt: 03291231.3
(22) Date de dépôt: 23.05.2003
(51) Int. Cl.: G11B 33/04

(54) **Procédé de fixation de plateaux de maintien pour disques photonumériques sur un support, et plateau de maintien associé**

(71) Demandeur: Knauf SNC, 70310 Sainte Marie en Chanois (FR)
(72) Inventeur: Crouan, Alain, 72000 Le Mans (FR)
(74) Mandataire: Breese, Pierre

(57) **Abrégé**

L'invention porte sur un procédé de fixation d'un plateau de maintien (10) pour disque optonumérique sur un support, et sur le plateau associé.

Le plateau comprend un fond rectangulaire (20) portant sur une première face (21) des moyens de maintien (22) du disque optonumérique, et un bord périphérique (30) rectangulaire se dressant à partir d'une deuxième face (23) du fond (20) opposée à la première face (21), le procédé de fixation comprenant au moins les étapes suivantes :
- le plateau (10) est placé dans un chargeur (40), debout sur un premier côté (31) du bord (30),
- des doigts de positionnement (42a, 42b) viennent temporairement en appui sur un deuxième côté (32) du bord (30) opposé au premier côté (31) pour maintenir le plateau (10) en position verticale.

Selon l'invention le deuxième côté (32) du bord périphérique (30) du plateau (10) porte au moins une rainure de blocage (33) du plateau (10) en position debout dans laquelle les doigts de positionnement (42a, 42b) viennent s'engager.

## Description

L'invention concerne en général les procédés de fixation de plateaux de maintien pour disques optonumériques sur un support, et les plateaux de maintien pour disque optonumérique.

Plus précisément, l'invention concerne, selon un premier aspect, un procédé de fixation d'un plateau de maintien pour disque optonumérique sur un support, le plateau comprenant un fond rectangulaire portant sur une première face des moyens de maintien du disque optonumérique, et un bord périphérique rectangulaire se dressant à partir d'une deuxième face du fond opposée à la première face, le procédé comprenant au moins les étapes suivantes :
le plateau est placé dans un chargeur, debout sur un premier côté du bord,
des doigts de positionnement viennent temporairement en appui sur un deuxième côté du bord opposé au premier côté pour maintenir le plateau en position verticale.

Selon un second aspect, l'invention concerne un plateau de maintien pour disque optonumérique, le plateau comprenant un fond rectangulaire portant sur une première face des moyens de maintien du disque optonumérique, et un bord périphérique rectangulaire se dressant à partir d'une deuxième face du fond opposée à la première face, et comprenant au moins des premier et deuxième côtés mutuellement opposés.

Des procédés du type décrit ci-dessus sont connus de l'art antérieur, en particulier pour la fixation à grande cadence de plateaux sur des supports en carton imprimés.

Les plateaux à fixer sont debout, alignés les uns derrière les autres dans un chargeur incliné à environ 10° par rapport à l'horizontale, le plateau de tête étant plus bas que les plateaux de queue. Le plateau de tête est retenu par un dispositif de blocage.

Ces plateaux sont pris les uns après les autres, en commençant par le plateau de tête, pour être fixés sur des supports. Un préhenseur à ventouse vient se solidariser au plateau de tête, puis le dispositif de blocage libère la rangée de plateaux pour que le plateau de tête puisse être emporté par le préhenseur.

Parallèlement, les doigts de positionnement viennent temporairement en appui sur le côté supérieur du plateau qui est situé juste derrière le plateau de tête. Ainsi, la rangée de plateau est retenue et ne bascule pas vers l'avant, bien que le dispositif de blocage ne la maintienne plus en place.

Ce procédé présente un défaut. Les côtés du plateau sont étroits, et le positionnement du côté supérieur du plateau par rapport aux doigts de positionnement doit être assuré avec une grande précision pour éviter que le plateau ne bascule parce que les doigts sont venus en appui trop au bord ou à côté du plateau. Cette grande précision à obtenir est un facteur important de limitation des cadences qu'il est possible d'atteindre avec le procédé de l'art antérieur.

Ces cadences sont actuellement limitées à environ 5000 plateaux fixés à l'heure et ne peuvent pas être augmentées car cela entraînerait de nombreux arrêt de la chaîne de fabrication à cause de plateaux mal retenus par les doigts de positionnement et ayant basculé.

Dans ce contexte, et selon un premier aspect, l'invention vise à proposer un procédé qui pallie le défaut mentionné ci-dessus et permettre d'augmenter les cadences de production.
A cette fin, le procédé de l'invention, par ailleurs conforme à la définition générique qu'en donne le préambule ci-dessus, est essentiellement caractérisé en ce que le deuxième côté du bord périphérique du plateau porte au moins une rainure de blocage du plateau en position debout dans laquelle les doigts de positionnement viennent s'engager.

Selon un second aspect, l'invention vise à proposer un plateau qui permette également de pallier le défaut mentionné ci-dessus et d'augmenter les cadences de production.

A cette fin, le plateau de l'invention, par ailleurs conforme à la définition générique qu'en donne le préambule ci-dessus, est essentiellement caractérisé en ce que le deuxième côté du bord périphérique du plateau porte au moins une rainure de blocage du plateau en position debout.

Dans un mode de réalisation possible du plateau de l'invention la rainure s'étend suivant le sens longitudinale du deuxième côté du bord périphérique.

Avantageusement, la rainure peut s'étendre sur toute la longueur du deuxième côté du bord périphérique.

De préférence, le deuxième côté du bord périphérique peut porter deux rainures longitudinales alignées s'étendant chacune sur une fraction de la longueur du deuxième côté.

Par exemple, la rainure peut présenter dans un plan transversal au deuxième côté un profil en V.

Avantageusement, la rainure peut présenter dans un plan transversal au deuxième côté un profil semi-cylindrique en creux.

De préférence, la profondeur maximum de la rainure peut être comprise entre 1/10^{ème} de millimètre et un millimètre.

Par exemple, le plateau de l'invention peut porter des rainures sur les premier et deuxième côtés du bord périphérique.

Avantageusement, le plateau de l'invention peut porter des rainures sur trois ou quatre côtés du bord périphérique.

D'autres caractéristiques et avantages de l'invention ressortiront clairement de la description qui en est donné ci-après, à titre indicatif et nullement limitatif, en référence aux figures annexées, parmi lesquelles :
- la figure 1 est une vue en perspective d'un plateau de maintien conforme à l'invention,
- la figure 2 est une vue en perspective de plateaux conformes à l'invention disposés dans un chargeur,
- la figure 3 est une vue en coupe partielle suivant les flèches III de la figure 1,
- la figure 4 est une vue en perspective d'un autre mode de réalisation d'un plateau de maintien conforme à l'invention, et
- la figure 5 est une vue en coupe partielle suivant les flèches V de la figure 4.

L'invention concerne donc selon un premier aspect un procédé de fixation d'un plateau de maintien 10 pour disque optonumérique, non représenté, sur un support non représenté.

Le plateau 10 comprend un fond rectangulaire 20 portant sur une première face 21 des moyens de maintien 22 du disque optonumérique, et un bord périphérique rectangulaire 30 se dressant à partir d'une deuxième face 23 du fond 20 opposée à la première face 21.

Le plateau de maintien 10 est typiquement en plastique transparent moulé, telle que du polystyrène.

Les moyens de maintien 22 comprennent une empreinte en creux 221 circulaire de taille correspondante à celle du disque, une rosace 222 dans laquelle le disque optonumérique vient s'encliqueter, et des oreilles 223 en creux disposées à la périphérie de l'empreinte en creux 221. La rosace 222 est située au centre de l'empreinte en creux. Le disque optonumérique vient s'encliqueter par son centre, évidé, sur cette rosace 222. Les oreilles permettent à un utilisateur de glisser son doigt sous le disque fixé à la rosace pour le désolidariser de celle-ci.

Le disque est typiquement un CD ROM, un CD audio ou un DVD.

Le support sur lequel le plateau de maintien 10 est fixé est par exemple une couverture en carton imprimé.

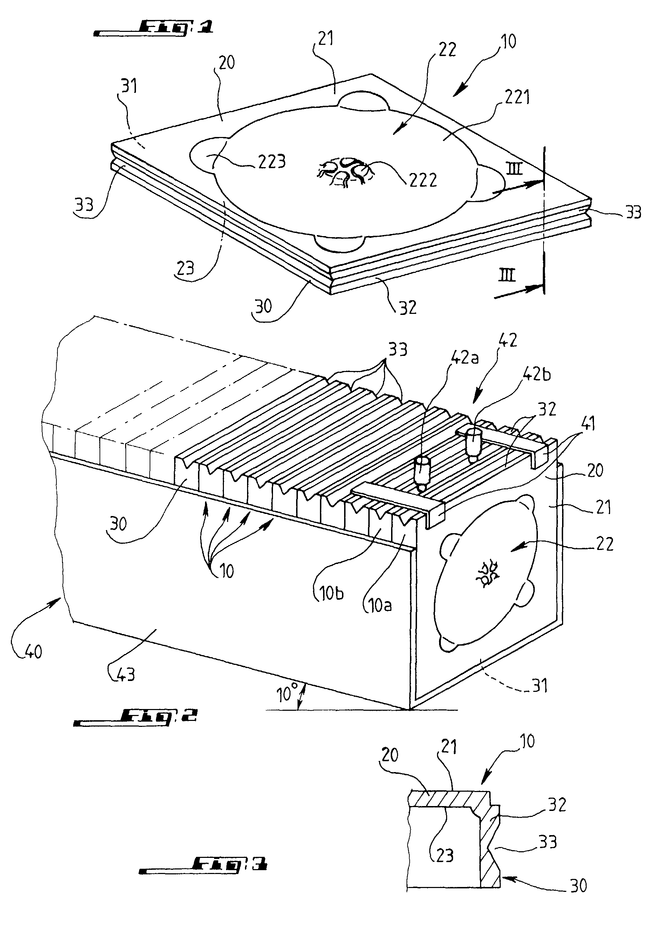

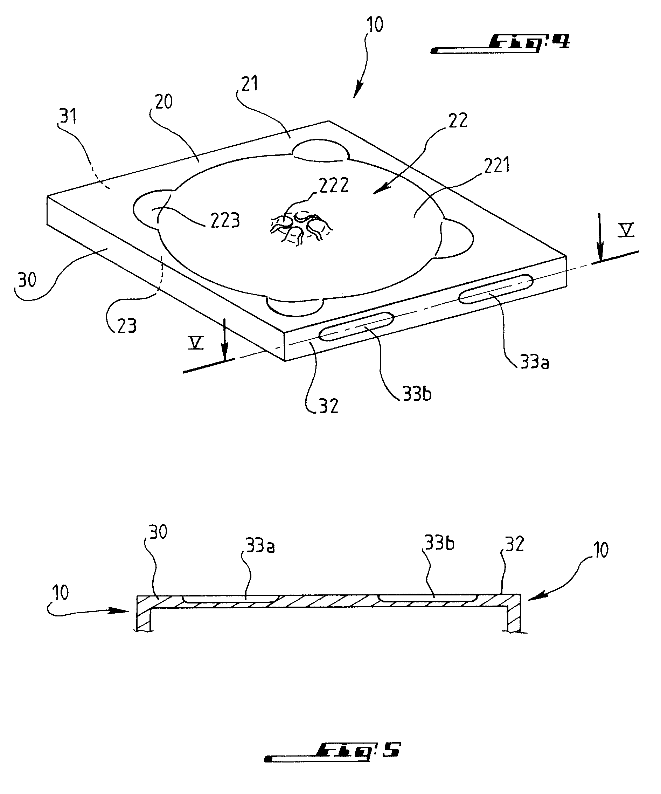

Le procédé de fixation du plateau de maintien 10 sur le support est connu de l'homme du métier et ne sera pas décrit en détail. Il suffit pour comprendre l'invention de préciser que ce procédé comprend au moins les étapes suivantes.
(a) Une pluralité de plateaux de maintien 10 est placée dans un chargeur 40, représenté sur la figure 2, chaque plateau étant debout sur un premier côté 31 de son bord périphérique 30. Les plateaux 10 sont disposés les uns derrière les autres, la première face 21 d'un plateau 10 étant en vis à vis de la seconde face 23 du plateau 10 voisin. Le chargeur 40 est incliné de 10° vers l'avant par rapport à l'horizontale, l'avant étant défini comme le côté du chargeur 40 où se trouve un plateau de tête 10a, c'est-à-dire celui qui sera fixé le premier sur le support. Le chargeur 40 comprend un premier dispositif de blocage sélectif 41, mobile entre position de blocage où le dispositif retient les plateaux 10 en position sur le chargeur 40 et empêche que ceux-ci basculent vers l'avant, et une position de libération où les plateaux 10 ne sont pas retenus. Les plateaux 10 sont guidés latéralement sur au moins un côté, par exemple par un montant 43 du chargeur 40.
(b) Un préhenseur à ventouse, non représenté, vient se solidariser au plateau de tête 10a. Parallèlement, le premier dispositif de blocage 41, initialement en position de blocage, adopte sa position de libération, et un deuxième dispositif de blocage 42 vient bloquer un second plateau 10b situé immédiatement derrière le plateau 10a.
(c) Le préhenseur à ventouse emporte le plateau de tête 10a.
(d) Le premier dispositif de blocage 41 passe de sa position de libération à sa position de blocage, le deuxième dispositif de blocage 42 libère le second plateau 10b, et l'ensemble des plateaux se décalent d'un rang vers l'avant. Le second plateau 10b se trouve alors dans la position initialement occupée par le plateau de tête 10a, et le procédé reprend à l'étape (a). Le deuxième dispositif de blocage 42 comprend des doigts de positionnement, par exemple deux doigts 42a et 42b comme représenté sur la figure 2, qui viennent temporairement en appui sur un deuxième côté 32 du bord 30 opposé au premier côté 31 pour maintenir le second plateau 10b en position verticale. Ces doigts 42a et 42b sont typiquement verticaux, et présentent une extrémité libre semi-cylindrique, de rayon proche de 1,2 millimètres.

Selon l'invention, le deuxième côté 32 du bord périphérique 30 de chaque plateau 10 porte au moins une rainure 33 de blocage du plateau 10 en position debout dans laquelle les doigts de positionnement 42a et 42b viennent s'engager.

Cette rainure 33 s'étend suivant dans le sens longitudinale du deuxième côté 32 du bord périphérique 30.

Dans un premier mode de réalisation représenté sur la figure 1, la rainure 33 s'étend sur toute la longueur du deuxième côté 32 du bord périphérique 30. Les doigts 42a et 42b sont donc engagés dans la même rainure 33.

Dans un deuxième mode de réalisation représenté sur les figures 4 et 5, le deuxième côté 32 du bord périphérique 30 porte deux rainures 33a et 33b longitudinales alignées, s'étendant chacune sur une fraction de la longueur du deuxième côté 32. Les doigts 42a et 42b sont dans ce cas engagés dans des rainures différentes, respectivement les rainures 33a et 33b.

Le deuxième côté 32 du bord 30 présente, dans ce deuxième mode de réalisation, une meilleure résistance mécanique que dans le premier mode de réalisation. En effet, il y a moins de matière retirée, et la matière retirée ne forme pas une bande continue, une telle bande constituant une ligne de moindre résistance.

En revanche, les moules nécessaires pour la fabrication des plateaux conformes au deuxième mode de réalisation sont légèrement plus complexe et plus coûteux.

Comme on peut le voir sur les figures 4 et 5, les extrémités longitudinales des rainures 33a et 33b sont arrondies dans le plan dans lequel s'étend le deuxième côté 32, et sont également arrondies dans le plan longitudinal perpendiculaire au plan précédent, pour des raisons à la fois esthétique et de tenue mécanique.

La rainure 33 ou les rainures 33a et 33b présentent dans un plan transversal au deuxième côté 32 un profil en V.

Suivant une variante de réalisation, la rainure 33 ou les rainures 33a et 33b présentent dans un plan transversal au deuxième côté 32 un profil semi-cylindrique en creux de rayon correspondant au rayon des extrémités libres semi-cylindriques des doigts de positionnement 42a et 42b.

Les axes des demi-cylindres constituant les extrémités libres des doigts de positionnement 42a et 42b sont parallèles à la direction longitudinale du deuxième côté 32.

Ces rainures 33, 33a et 33b sont ménagés dans la masse du bord 30.

Dans une variante de réalisation, c'est l'ensemble du bord 30 qui peut former la rainure, le bord 30 présentant alors un creux sur une première face et une bosse sur une deuxième fax opposée à la première.

Le profil en V permet un positionnement très précis des doigts de positionnement 42a et 42b car le contact entre les extrémités libres de ces doigts et les deux faces de la ou des rainures se fait selon deux lignes parallèles seulement.

Le profil en demi-cylindre permet d'obtenir un positionnement moins précis, car toute la surface des extrémités libres des doigts de positionnement 42a et 42b est en contact avec la surface de la ou des rainures. Des irrégularités sur ces surfaces peuvent perturber le positionnement. En revanche, le profil semi-cylindrique permet de mieux maintenir les doigts à l'intérieur des rainures car la pente à franchir pour que le doigt sorte de la rainure est plus forte.

La profondeur maximum de la rainure 33 ou des rainures 33a et 33b est comprise entre 1/10^{ème} de millimètre et un millimètre, suivant l'épaisseur du bord 30. Elle est typiquement de 0,5 millimètres.

La largeur transversale des côtés du bord 30 est de quatre millimètres environ, et la largeur transversale de la rainure 33 ou des rainures 33a et 33b est de deux millimètres environ.

Les plateaux 10 présentent une forme carrée ou rectangulaire.

Le bord 30 porte des rainures 33, 33a, 33b sur un seul côté, deux côtés, trois côtés ou même quatre côtés.

Des rainures des quatre côtés permettent de disposer les plateaux 10 dans le chargeur 40 avec n'importe quel côté orienté vers les doigts 42a et 42b. Ceci est particulièrement avantageux dans le cas de plateaux carrés, présentant quatre côtés parfaitement identiques.

Des rainures de deux côtés opposés sont bien adaptées au cas de plateaux rectangulaires symétriques par rapport à un axe médian.

Un même côté de bord 30 peut porter plus de deux rainures identiques aux rainures 33a et 33b, par exemple trois ou quatre, en fonction du nombre de doigts de positionnement que comporte de second dispositif de blocage 42.

L'invention s'applique à des plateaux de maintien réalisés en d'autres matières qu'un plastique transparent, et à des plateaux réalisés avec d'autres procédés que le moulage.

On conçoit donc bien que le procédé de l'invention permet de retenir de façon efficace le plateau en position debout, le doigt de positionnement étant engagé dans une rainure et pouvant difficilement glisser en dehors. La probabilité que le doigt soit mal positionné et que le plateau bascule est fortement diminuée, et les cadences de production peuvent être augmentées dans des proportions importantes.

## Revendications

1. Procédé de fixation d'un plateau de maintien (10) pour disque optonumérique sur un support, le plateau comprenant un fond rectangulaire (20) portant sur une première face (21) des moyens de maintien (22) du disque optonumérique, et un bord périphérique (30) rectangulaire se dressant à partir d'une deuxième face (23) du fond (20) opposée à la première face (21), le procédé comprenant au moins les étapes suivantes :
- le plateau (10) est placé dans un chargeur (40), debout sur un premier côté (31) du bord (30),
- des doigts de positionnement (42a, 42b) viennent temporairement en appui sur un deuxième côté (32) du bord (30) opposé au premier côté (31) pour maintenir le plateau (10) en position verticale, **caractérisé en ce que** le deuxième côté (32) du bord périphérique (30) du plateau (10) porte au moins une rainure (33, 33a, 33b) de blocage du plateau (10) en position debout dans laquelle les doigts de positionnement (42a, 42b) viennent s'engager.

2. Plateau de maintien pour disque optonumérique, le plateau (10) comprenant un fond rectangulaire (20) portant sur une première face (21) des moyens de maintien (22) du disque optonumérique, et un bord périphérique (30) rectangulaire se dressant à partir d'une deuxième face (23) du fond (20) opposée à la première face (21), et comprenant au moins des premier et deuxième côtés (31, 32) mutuellement opposés, **caractérisé en ce que** le deuxième côté (32) du bord périphérique (30) du plateau (10) porte au moins une rainure (33, 33a, 33b) de blocage du plateau (10) en position debout.

3. Plateau selon la revendication 2, **caractérisé en ce que** la rainure (33, 33a, 33b) s'étend suivant le sens longitudinale du deuxième côté (32) du bord périphérique (30).

4. Plateau selon la revendication 3, **caractérisé en ce que** la rainure (33) s'étend sur toute la longueur du deuxième côté (32) du bord périphérique (30).

5. Plateau selon la revendication 3, **caractérisé en ce que** le deuxième côté (32) du bord périphérique (30) porte deux rainures (33a, 33b) longitudinales alignées s'étendant chacune sur une fraction de la longueur du deuxième côté (32).

6. Plateau selon l'une quelconque des revendications 2 à 5, **caractérisé en ce que** la rainure (33, 33a, 33b) présente dans un plan transversal au deuxième côté (32) un profil en V.

7. Plateau selon l'une quelconque des revendications 2 à 5, **caractérisé en ce que** la rainure (33, 33a, 33b) présente dans un plan transversal au deuxième côté (32) un profil semi-cylindrique en creux.

8. Plateau selon l'une quelconque des revendications 2 à 7, **caractérisé en ce que** la profondeur maximum de la rainure (33, 33a, 33b) est comprise entre 1/10^{ème} de millimètre et un millimètre.

9. Plateau selon l'une quelconque des revendications 2 à 8, **caractérisé en ce qu'**il porte des rainures (33, 33a, 33b) sur les premier et deuxième côtés (31, 32) du bord périphérique (30).

10. Plateau selon l'une quelconque des revendications 2 à 8, **caractérisé en ce qu'**il porte des rainures (33, 33a, 33b) sur trois ou quatre côtés du bord périphérique (30).
